(19) Europäisches Patentamt
European Patent Office
Office européen des brevets

(11) **EP 3 747 080 B1**

(12) **FASCICULE DE BREVET EUROPEEN**

(45) Date de publication et mention de la délivrance du brevet:
**12.01.2022 Bulletin 2022/02**

(21) Numéro de dépôt: **19707858.7**

(22) Date de dépôt: **29.01.2019**

(51) Int Cl.:
*H01M 10/625* (2014.01)     *H01M 10/6569* (2014.01)
*H01M 10/651* (2014.01)     *H01M 10/613* (2014.01)

(86) Numéro de dépôt international:
**PCT/FR2019/050191**

(87) Numéro de publication internationale:
**WO 2019/150035 (08.08.2019 Gazette 2019/32)**

(54) **PROCÉDÉ DE REFROIDISSEMENT D'UN DISPOSITIF DE STOCKAGE ÉLECTRIQUE ÉQUIPANT UN VÉHICULE**

VERFAHREN ZUM KÜHLEN EINER STROMSPEICHERVORRICHTUNG EINES FAHRZEUGS

METHOD FOR COOLING AN ELECTRICAL STORAGE DEVICE EQUIPPING A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.01.2018 FR 1850763**
         **29.03.2018 FR 1852758**

(43) Date de publication de la demande:
**09.12.2020 Bulletin 2020/50**

(73) Titulaire: **Valeo Systèmes Thermiques**
**78320 Le Mesnil-Saint-Denis (FR)**

(72) Inventeurs:
• **YAHIA, Mohamed**
  **78322 Le Mesnil-Saint-Denis Cedex (FR)**
• **AKIKI, Roland**
  **78322 Le Mesnil-Saint-Denis Cedex (FR)**

(74) Mandataire: **Valeo Systèmes Thermiques**
**Service Propriété Intellectuelle**
**ZA l'Agiot, 8 rue Louis Lormand**
**CS 80517**
**La Verrière**
**78322 Le Mesnil-Saint-Denis Cedex (FR)**

(56) Documents cités:
**EP-A1- 2 226 887     EP-A1- 3 154 121**
**WO-A1-2013/072754     US-B1- 7 940 028**

EP 3 747 080 B1

**Description**

Le domaine de la présente invention est celui des systèmes de conditionnement thermique pour véhicule, tel qu'un véhicule automobile. Elle a pour objet un procédé de refroidissement d'un dispositif de stockage électrique équipant un véhicule, tel qu'un véhicule automobile.

Un véhicule automobile est couramment équipé d'un système de conditionnement thermique pour chauffer et/ou refroidir des zones diverses et/ou différents composants du véhicule automobile. Il est notamment connu d'utiliser un tel système de conditionnement thermique pour traiter thermiquement un flux d'air envoyé dans l'habitacle du véhicule automobile.

Il est aussi connu d'utiliser ce circuit pour refroidir un dispositif de stockage électrique qui comprend au moins une batterie électrique du véhicule automobile, la batterie électrique étant utilisée pour fournir une énergie à un moteur électrique capable de mettre en mouvement le véhicule automobile. Le circuit de fluide réfrigérant fournit ainsi l'énergie capable de refroidir le dispositif de stockage électrique pendant son utilisation en phase de roulage.

Il est également connu de charger le dispositif de stockage électrique du véhicule automobile en le raccordant au réseau électrique domestique pendant une longue période, telle que plusieurs heures notamment. Cette technique de charge permet de s'affranchir de l'utilisation de tout système de refroidissement de la batterie électrique, ou bien de limiter la puissance de refroidissement demandée au système de refroidissement.

Une nouvelle technique de charge a fait son apparition récemment. Elle consiste à charger le dispositif de stockage électrique sous une tension et un ampérage élevés, par exemple une tension de 800 V et un ampérage de 400 A, de manière à charger le dispositif de stockage électrique en un temps maximum de quelques dizaines de minutes. Cette charge rapide provoque un échauffement du dispositif de stockage électrique qu'il convient de traiter thermiquement.

Un problème technique à résoudre réside donc dans une capacité de pouvoir dissiper le plus efficacement possible des calories générées par le dispositif de stockage électrique pendant la charge rapide tout en limitant une consommation énergétique et/ou un encombrement du système de conditionnement thermique, y compris dans des conditions extrêmes de fortes températures extérieures, notamment quand le véhicule automobile est à l'arrêt. Il convient également de noter que le traitement thermique d'un habitacle du véhicule doit également être opéré simultanément au refroidissement du dispositif de stockage électrique.

La présente invention s'inscrit dans ce contexte et propose un procédé de refroidissement d'un dispositif de stockage thermique équipant un véhicule, notamment automobile, qui permet un refroidissement rapide et efficace du dispositif de stockage thermique, y compris lors d'une charge rapide de ce dernier, à partir d'un circuit de fluide réfrigérant naturel, tel que le dioxyde de carbone, notamment.

Un procédé de refroidissement de la présente invention est un procédé de refroidissement d'un dispositif de stockage électrique par l'intermédiaire d'un circuit de fluide réfrigérant à l'intérieur duquel circule un fluide réfrigérant naturel. Le circuit de fluide réfrigérant comprend au moins un premier échangeur de chaleur couplé thermiquement au dispositif de stockage électrique, dans lequel le procédé de refroidissement comprend au moins :

- une première étape de détermination d'un état de charge rapide du dispositif de stockage électrique. Un état de charge rapide se définit par le fait que le véhicule automobile est en station de charge électrique, le dispositif de stockage électrique 2 étant branché à une source électrique délivrant un courant électrique par exemple de 400 A à 800 V.

- une deuxième étape de détermination d'une puissance thermique à extraire du dispositif de stockage électrique jusqu'à ce qu'un niveau de charge du dispositif de stockage électrique soit supérieur ou égale à un seuil déterminé. Le seuil déterminé est par exemple un seuil de 100%.

- une troisième étape de mesure d'une température du dispositif de stockage électrique.

- une quatrième étape d'adaptation d'une circulation du fluide réfrigérant à l'intérieur du premier échangeur de chaleur afin qu'une température du fluide réfrigérant soit comprise entre 15°C et 28°C.

Ces dispositions sont telles que le dispositif de stockage électrique est efficacement refroidi à partir d'un maintien de la température du fluide réfrigérant à l'intérieur d'une plage de température comprise entre 15°C et 28°C, préférentiellement entre 20°C et 26°C, et un maintien d'une basse pression du fluide réfrigérant à l'intérieur du premier échangeur de chaleur qui est supérieure à une basse pression de l'art antérieur. L'invention tire avantage du comportement du fluide réfrigérant naturel, tel que le dioxyde de carbone, pour autoriser une élévation du niveau de la basse pression, ce qui se traduit par une augmentation des performances frigorifiques du circuit.

Le procédé de refroidissement comprend avantageusement l'une quelconque au moins des caractéristiques suivantes, prises seules ou en combinaison :

- la quatrième étape adapte la circulation du fluide réfrigérant à l'intérieur du premier échangeur de chaleur afin que la température du fluide réfrigérant soit comprise entre 20°C et 26°C.

- la deuxième étape prend en compte le niveau de charge du dispositif de stockage électrique. Au cours de la deuxième étape, à partir du niveau de charge du dispositif de stockage électrique et pour atteindre un niveau de charge supérieure ou égal au seuil déterminé, il est calculé quelle est la puissance thermique générée, au cours du passage du niveau de charge observé au seuil déterminé. La puissance thermique générée est équivalente à la puissance thermique à extraire à partir de la mise en œuvre du procédé de refroidissement de la présente invention.

- le premier échangeur de chaleur est un échangeur de chaleur fluide réfrigérant / fluide caloporteur constitutif d'un circuit de fluide caloporteur.

- le circuit de fluide caloporteur comprend une pompe à vitesse variable.

- la quatrième étape comprend une phase de modification d'une vitesse de rotation de la pompe. Une modification de la vitesse de rotation de la pompe est une variante de l'étape d'adaptation de la circulation du fluide caloporteur à l'intérieur du premier échangeur de chaleur pour permettre finalement une fixation de la température du fluide réfrigérant.

- le circuit de fluide caloporteur comprend une ligne de contournement qui s'étend entre un point de dérivation interposé entre le premier échangeur de chaleur et le dispositif de stockage électrique, et un point de raccordement interposé entre le dispositif de stockage électrique et le premier échangeur de chaleur, et en ce que la ligne de contournement est équipée d'un moyen de contrôle du débit de fluide caloporteur circulant à l'intérieur de la ligne de contournement.

- la quatrième étape comprend une phase de modification du débit de fluide caloporteur par ouverture ou fermeture dudit moyen de contrôle du débit. Une modification du débit de fluide caloporteur circulant à l'intérieur du moyen de contrôle du débit est une variante de l'étape d'adaptation de la circulation du fluide caloporteur à l'intérieur du premier échangeur de chaleur pour permettre finalement une fixation de la température du fluide réfrigérant FR.

- le premier échangeur de chaleur est un échangeur de chaleur direct. Un échangeur de chaleur direct est agencé pour permettre un échange de chaleur direct entre le fluide réfrigérant circulant à l'intérieur du premier échangeur de chaleur et le dispositif de stockage électrique, sans passer par exemple par l'intermédiaire d'un circuit de fluide caloporteur. A cet effet, le premier échangeur de chaleur est un échangeur de chaleur direct agencé pour permettre un échange de chaleur par conduction entre le fluide réfrigérant circulant à l'intérieur du premier échangeur de chaleur et le dispositif de stockage électrique, et agencé pour permettre un échange de chaleur par convection avec l'air environnant le dispositif de stockage électrique et le premier échangeur de chaleur.

- le circuit de fluide réfrigérant comprend un dispositif d'expansion en amont du premier échangeur de chaleur, une vanne de contrôle du débit étant interposée entre le premier échangeur de chaleur et le dispositif d'expansion. Une modification du débit de fluide réfrigérant circulant à l'intérieur de la vanne de contrôle du débit est une variante de l'étape d'adaptation de la circulation du fluide réfrigérant à l'intérieur du premier échangeur de chaleur pour permettre finalement une fixation de la température du fluide réfrigérant.

- la quatrième étape comprend une étape de comparaison de la température du fluide réfrigérant avec une température minimale et une température maximale du fluide réfrigérant fixées pour optimiser le système de conditionnement thermique.

- si la température du fluide réfrigérant est inférieure à la température minimale, la quatrième étape comprend une étape d'adaptation de la circulation du fluide réfrigérant circulant à l'intérieur du premier échangeur de chaleur, avantageusement par augmentation du débit de fluide réfrigérant circulant à l'intérieur du premier échangeur de chaleur, et/ou bien une étape d'augmentation d'un débit massique du fluide caloporteur circulant à l'intérieur du premier échangeur de chaleur.

- si la température du fluide réfrigérant est supérieure à la température maximale, la quatrième étape comprend une étape d'adaptation de la circulation du fluide réfrigérant circulant à l'intérieur du premier échangeur de chaleur, avantageusement par diminution du débit de fluide réfrigérant circulant à l'intérieur du premier échangeur de chaleur, et/ou bien une étape de diminution d'un débit massique du fluide caloporteur circulant à l'intérieur du premier échangeur de chaleur.

- une pression de fluide réfrigérant à l'intérieur du premier échangeur de chaleur est maintenue entre 51 bars et 69 bars, préférentiellement entre 57 bars et 65 bars, pour optimiser le système de conditionnement thermique. On comprend qu'à partir d'une basse pression à l'intérieur du premier échangeur de chaleur, qui est supérieure à celle de l'art antérieur, la puissance thermique à extraire du dispositif de stockage électrique est correctement compensée par la puissance de refroidissement du système de conditionnement thermique, en raison d'une amélioration de la conductivité thermique globale du dispositif de stockage électrique et d'un ajustement du débit massique du fluide réfrigérant et/ou du fluide caloporteur à l'intérieur du premier échangeur de chaleur.

- le fluide réfrigérant est du dioxyde de carbone.

D'autres caractéristiques, détails et avantages de l'invention ressortiront plus clairement à la lecture de la description donnée ci-après à titre indicatif en relation avec des dessins dans lesquels

- la figure 1 est une vue schématique d'une première variante de réalisation d'un système de conditionnement thermique selon l'invention,

- la figure 2 est une vue schématique d'une deuxième variante de réalisation d'un système de conditionnement thermique selon l'invention,

- la figure 3 est une illustration d'un cycle thermodynamique qui est présenté dans un diagramme enthalpique et qui est opéré par l'un quelconque des systèmes de conditionnement thermique illustrés sur les figures précédentes,

- la figure 4 est une illustration schématique d'un procédé de refroidissement de la présente invention qui est mis en œuvre par l'un quelconque des systèmes de conditionnement thermique illustrés sur les figures 1 et 2.

Il faut tout d'abord noter que les figures exposent l'invention de manière détaillée pour mettre en œuvre l'invention, lesdites figures pouvant bien entendu servir à mieux définir l'invention le cas échéant.

Les différents composants sont explicités ci-dessous selon un sens de circulation du fluide considéré, c'est-à-dire le fluide réfrigérant, le fluide caloporteur ou le flux d'air. Les termes amont et aval employés dans la description qui suit se réfèrent au sens de circulation dudit fluide.

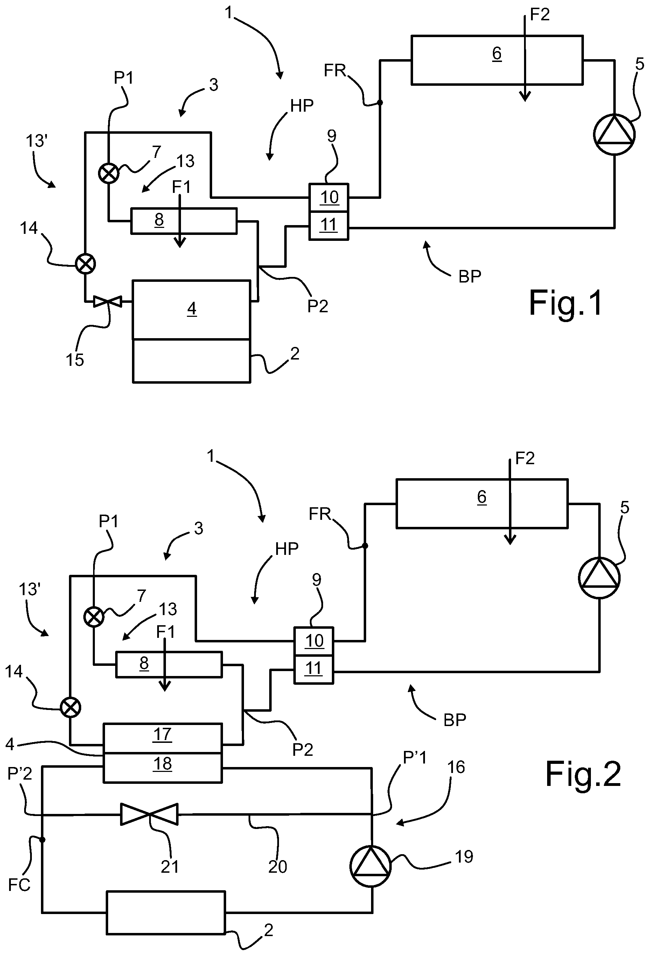

Sur les figures 1 et 2, est illustré un système de conditionnement thermique 1 destiné à équiper un véhicule, et plus particulièrement un véhicule automobile électrique, dont le déplacement est procuré au moins par un ou plusieurs moteurs électriques alimentés par un dispositif de stockage électrique 2, et accessoirement un moteur thermique pour le cas d'un véhicule automobile hybride. Le dispositif de stockage électrique 2 comprend au moins une batterie électrique, et préférentiellement une pluralité de batteries électriques, éventuellement associées à d'autres composants électriques, du type convertisseur ou analogue.

Le système de conditionnement thermique 1 est destiné à refroidir le dispositif de stockage électrique 2 ainsi qu'un premier flux d'air F1 qui est par exemple un flux d'air destiné à être admis à l'intérieur de l'habitacle du véhicule automobile et/ou un flux d'air recyclé en provenance de l'habitacle du véhicule automobile et renvoyé vers celui-ci.

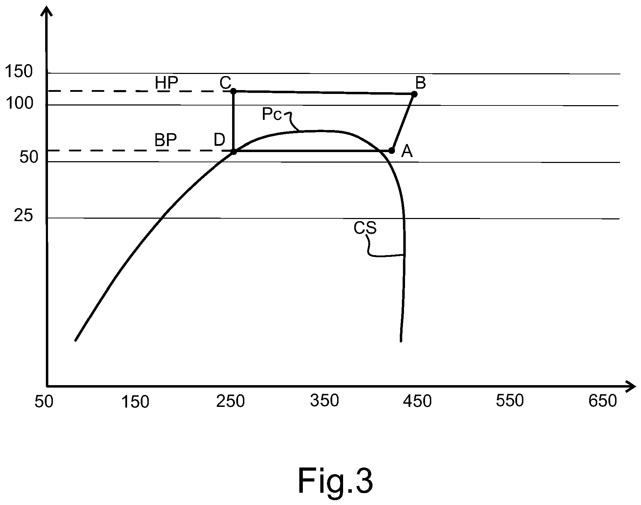

Le système de conditionnement thermique 1 comprend un circuit de fluide réfrigérant 3 à l'intérieur duquel circule un fluide réfrigérant FR. Le fluide réfrigérant FR est un fluide réfrigérant de type naturel, et notamment du dioxyde de carbone, couramment dénommé R744, ou un fluide réfrigérant analogue. Ce fluide réfrigérant FR présente l'avantage d'être sans impact négatif sur l'environnement de par son caractère naturel. Le fluide réfrigérant FR présente un diagramme enthalpique, ou courbe de Mollier, illustré en figure 3, qui comporte une courbe de saturation CS qui, pour des enthalpies supérieures à celle du point critique Pc du fluide réfrigérant FR, est une fonction décroissante. Autrement dit, le long de la courbe de saturation CS et pour des enthalpies supérieures à celle du point critique Pc, plus l'enthalpie augmente, plus la pression diminue.

Le circuit de fluide réfrigérant 3 comprend au moins un premier échangeur de chaleur 4 qui est couplé thermiquement avec le dispositif de stockage électrique 2 pour refroidir ce dernier. Ce couplage est soit direct comme illustré sur la figure 1, soit indirect comme illustré sur la figure 2, ces deux variantes étant chacune décrites en détail ci-dessous.

Le circuit de fluide réfrigérant 3 comprend aussi un dispositif de compression 5 du fluide réfrigérant FR, tel qu'un compresseur ou analogue, pour comprimer le fluide réfrigérant FR depuis une basse pression BP vers une haute pression HP, la haute pression HP étant strictement supérieure à la basse pression BP.

Le circuit de fluide réfrigérant 3 comprend aussi un deuxième échangeur de chaleur 6 qui est apte à permettre un échange de chaleur entre un deuxième flux d'air F2 et le fluide réfrigérant FR, notamment en vue de refroidir ce dernier à pression constante. Le deuxième flux d'air F2 est par exemple un flux d'air extérieur prévu pour refroidir le deuxième échangeur de chaleur 6 et consécutivement le fluide réfrigérant FR qui circule à l'intérieur du deuxième échangeur de chaleur 6. Le deuxième échangeur de chaleur 6 est par exemple installé en face avant du véhicule automobile et le deuxième échangeur de chaleur 6 est alors utilisé comme un condenseur sur l'air.

Le circuit de fluide réfrigérant 3 comprend aussi un organe d'expansion 7 qui est apte à permettre une détente du fluide réfrigérant FR depuis la haute pression HP vers la basse pression BP. L'organe d'expansion 7 est indifféremment un détendeur thermostatique, un détendeur électronique, un orifice tube ou analogue.

Le circuit de fluide réfrigérant 3 comprend par ailleurs un troisième échangeur de chaleur 8 qui est apte à permettre un échange de chaleur entre le premier flux d'air F1 et le fluide réfrigérant FR, en vue de refroidir le premier flux d'air F1. En conséquence, le troisième échangeur de chaleur 8 se comporte notamment comme un évaporateur apte à refroidir le premier flux d'air F1, préalablement à son admission à l'intérieur de l'habitacle du véhicule automobile. Le troisième échangeur de chaleur 8 est par exemple logé à l'intérieur d'une installation de ventilation, de chauffage et/ou de climatisation du véhicule automobile qui peut être intégré au système de conditionnement thermique 1 de l'invention, le cas échéant.

Le circuit de fluide réfrigérant 3 comprend également un échangeur de chaleur interne 9 qui comporte une première passe 10 et une deuxième passe 11, l'échangeur de chaleur interne 9 étant agencé de manière à ce que le fluide réfrigérant FR circulant à l'intérieur de la première passe 10 échange de la chaleur avec le fluide réfrigérant FR circulant à l'intérieur de la deuxième passe 11.

Le circuit de fluide réfrigérant 3 comporte un point de divergence P1 qui est interposé entre la première passe 10 de l'échangeur de chaleur interne 9 et l'organe d'expansion 7 ainsi qu'un point de convergence P2 qui est interposé entre le troisième échangeur de chaleur 8 et la deuxième passe 11 de l'échangeur de chaleur interne 9.

Le circuit de fluide réfrigérant 3 comporte une première branche 13 qui s'étend entre le point de divergence P1 et le point de divergence P2, la première branche 13 comprenant l'organe d'expansion 7 et le troisième échangeur de chaleur 8.

Le circuit de fluide réfrigérant 3 comporte une deuxième branche 13' qui s'étend parallèlement à la première branche 13 entre le point de divergence P1 et le point de convergence P2, la deuxième branche 13' comprenant un dispositif d'expansion 14, accessoirement une vanne de contrôle du débit 15 tel qu'illustré sur la figure 1, et le premier échangeur de chaleur 4. Le dispositif d'expansion 14 est apte à permettre une détente du fluide réfrigérant FR depuis la haute pression HP vers la basse pression BP. Le dispositif d'expansion 14 est indifféremment un détendeur thermostatique, un détendeur électronique, un orifice tube ou analogue. La vanne de contrôle du débit 15 est agencée pour contrôler un débit de fluide réfrigérant FR circulant à l'intérieur de la vanne de contrôle du débit 15 pour mettre en œuvre une étape de fixation de la température du fluide réfrigérant dans le premier échangeur de chaleur 4.

Une modification du débit de fluide réfrigérant FR circulant à l'intérieur de la vanne de contrôle du débit 15 est une variante d'une étape d'adaptation de la circulation du fluide réfrigérant FR à l'intérieur du premier échangeur de chaleur 4 pour permettre finalement une fixation de la température du fluide réfrigérant selon un procédé de la présente invention, tel que décrit ci-dessous.

Le fluide réfrigérant FR s'écoule depuis le dispositif de compression 5 vers le deuxième échangeur de chaleur 6, puis vers la première passe 10 de l'échangeur de chaleur interne 9, puis jusqu'au point de divergence P1. Le fluide réfrigérant FR s'écoule alors soit à l'intérieur de la première branche 13, c'est-à-dire vers l'organe d'expansion 7, puis vers le troisième échangeur de chaleur 8 pour atteindre le point de convergence P2 ; soit à l'intérieur de la deuxième branche 13', c'est-à-dire vers le dispositif d'expansion 14, éventuellement à l'intérieur de la vanne de contrôle du débit 15, puis vers le premier échangeur de chaleur 4 pour atteindre le point de convergence P2. Puis le fluide réfrigérant FR s'écoule depuis le point de convergence P2 vers la deuxième passe 11 de l'échangeur de chaleur interne 9 pour rejoindre le dispositif de compression 5.

Le fluide réfrigérant FR est à la haute pression HP entre une sortie du dispositif de compression 5 et une entrée de l'organe d'expansion 7 ou du dispositif d'expansion 14. Le fluide réfrigérant FR est à la basse pression BP entre une sortie de l'organe d'expansion 7 ou du dispositif d'expansion 14 et une entrée du dispositif de compression 5.

Sur la figure 1, le premier échangeur de chaleur 4 est un échangeur de chaleur direct qui est agencé pour permettre un échange de chaleur direct entre le fluide réfrigérant FR circulant à l'intérieur du premier échangeur de chaleur 4 et le dispositif de stockage électrique 2, sans passer par exemple par l'intermédiaire d'un circuit de fluide caloporteur. A cet effet, le premier échangeur de chaleur 4 est un échangeur de chaleur direct agencé pour permettre un échange de chaleur par conduction entre le fluide réfrigérant FR circulant à l'intérieur du premier échangeur de chaleur 4 et le dispositif de stockage électrique 2, et/ou agencé pour permettre un échange de chaleur par convection avec l'air environnant le dispositif de stockage électrique 2 et le premier échangeur de chaleur 4.

Sur la figure 2, le premier échangeur de chaleur 4 est un échangeur de chaleur fluide réfrigérant / fluide caloporteur qui est prévu pour permettre un échange de chaleur entre le fluide réfrigérant FR circulant à l'intérieur de la deuxième branche 13 et un fluide caloporteur FC circulant à l'intérieur d'un circuit de fluide caloporteur 16. Plus particulièrement, le premier échangeur de chaleur 4 est prévu pour permettre un échange de chaleur entre le fluide réfrigérant FR circulant à l'intérieur d'un premier passage 17 du premier échangeur de chaleur 4 et le fluide caloporteur FC circulant à l'intérieur d'un deuxième passage 18 du premier échangeur de chaleur 4, le deuxième passage 18 étant constitutif du circuit de fluide caloporteur 16.

Le circuit de fluide caloporteur 16 comprend une pompe 19 pour faire circuler le fluide caloporteur FC à l'intérieur du circuit de fluide caloporteur 16. De préférence, la pompe 19 est à vitesse variable de telle sorte que la pompe 19 est apte à mettre en mouvement le fluide caloporteur FC selon divers débits à l'intérieur du circuit de fluide caloporteur 16.

Une modification de la vitesse de la pompe 19 est une autre variante de l'étape d'adaptation de la circulation du fluide caloporteur FC à l'intérieur du premier échangeur de chaleur 4 pour permettre finalement une fixation de la température du fluide réfrigérant FR selon le procédé de la présente invention, tel que décrit ci-dessous.

Le circuit de fluide caloporteur 16 comporte un point de dérivation P'1 qui est interposé entre la pompe 19 et le deuxième passage 18 du premier échangeur de chaleur 4. Le circuit de fluide caloporteur 16 comporte un point de raccordement P'2 qui est interposé entre le deuxième passage 18 du premier échangeur de chaleur 4 et le dispositif de stockage électrique 2. Une ligne de contournement 20 du premier échangeur de chaleur 4 s'étend entre le point de dérivation P'1 et le point de raccordement P'2, la ligne de contournement 20 étant équipée d'un moyen de contrôle du débit 21 de fluide caloporteur FC à l'intérieur de la ligne de contournement 20.

Le fluide caloporteur FC s'écoule à l'intérieur du circuit de fluide caloporteur 16 depuis la pompe 19 vers le point de dérivation P'1, puis soit vers le moyen de contrôle du débit 21 pour rejoindre le point de raccordement P'2, soit vers le deuxième passage 18 du premier échangeur de chaleur 4 pour rejoindre ensuite le point de raccordement P'2. Du point de raccordement P'2, le fluide caloporteur FC s'écoule vers la pompe 19 en traversant le dispositif de stockage électrique 2.

Une modification du débit de fluide caloporteur circulant à l'intérieur du moyen de contrôle du débit 21 est une autre variante de l'étape d'adaptation de la circulation du fluide caloporteur FC à l'intérieur du premier échangeur de chaleur 4 pour permettre finalement une fixation de la température du fluide réfrigérant FR selon le procédé de la présente invention, tel que décrit ci-dessous.

En se reportant à nouveau sur la figure 3, le fluide réfrigérant FR subit, à l'intérieur du circuit de fluide réfrigérant 3, un cycle thermodynamique qui comprend :

- une première phase AB de compression du fluide réfrigérant FR qui est effectuée à l'intérieur du dispositif de compression 5 et au cours de laquelle le fluide réfrigérant FR est comprimé depuis la basse pression BP, qui est de l'ordre de 57 bars, en pression absolue, vers la haute pression HP, qui est de l'ordre de 120 bars, en pression absolue,

- une deuxième phase BC d'évacuation de chaleur par le fluide réfrigérant FR vers le deuxième plus d'air F2 qui est effectuée à l'intérieur du deuxième échangeur de chaleur 6, ce dernier étant alors utilisé comme un refroidisseur de gaz,

- une troisième phase CD de détente du fluide réfrigérant FR depuis la haute pression HP vers la basse pression BP et opéré par l'organe d'expansion 14,

- une quatrième phase DA d'évaporation du fluide réfrigérant FR qui est effectuée à l'intérieur du premier échangeur de chaleur 4.

Selon la présente invention, un tel cycle thermodynamique est réalisé de manière efficace, en procurant un refroidissement adapté et optimisé du dispositif de stockage électrique 2. Un tel cycle thermodynamique permet un refroidissement prenant en compte des paramètres mesurés et/ou calculés instantanément, ces paramètres comprenant des caractéristiques physiques du système de conditionnement thermique 1, tels qu'une température du dispositif de stockage électrique Tbatt, une température extérieure Text du deuxième flux d'air F2, une température du fluide réfrigérant TFR, une température du fluide caloporteur TFC notamment, pour ajuster en temps réel un débit massique M de fluide, indifféremment fluide caloporteur FC ou fluide réfrigérant FR, circulant à l'intérieur du premier échangeur de chaleur 4.

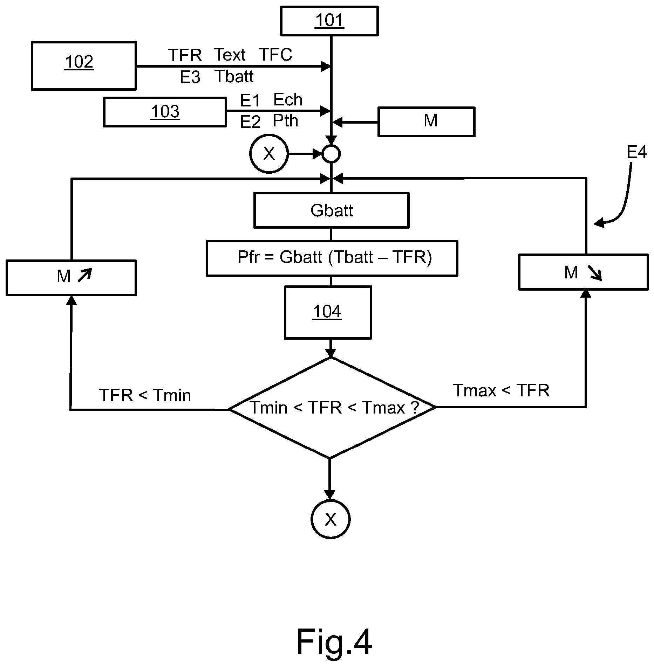

Ce résultat est atteint à partir d'une mise en œuvre d'un procédé de refroidissement décrit par le logigramme représenté en figure 4.

Le procédé de refroidissement comprend une étape d'initialisation 101 au moins des valeurs respectives des paramètres susvisés.

Le procédé de refroidissement comprend ensuite une étape d'acquisition 102 des paramètres susvisés nécessaires à la mise en œuvre du procédé. L'étape d'acquisition 102 comprend notamment une étape d'acquisition de la température extérieure Text, tel que la température du deuxième flux d'air F2 prise en amont du deuxième échangeur de chaleur 6 selon un sens d'écoulement du deuxième flux d'air F2 à travers le deuxième échangeur de chaleur 6.

Le procédé de refroidissement comprend ensuite une étape de détermination d'un objectif de capacité de refroidissement 103. On rappelle que la capacité de refroidissement CoolCap du système de conditionnement thermique 1 est notamment donnée par la formule [1] suivante :

$$\text{CoolCap} = M\ (H_2 - H_1) \qquad\qquad [1]$$

Dans laquelle :

- M est le débit massique du fluide réfrigérant FR à l'intérieur du premier échangeur de chaleur 4,

- H2 est l'enthalpie du fluide réfrigérant FR en sortie du premier échangeur de chaleur 4, et

- H1 est l'enthalpie du fluide réfrigérant FR en entrée du premier échangeur de chaleur 4.

L'étape de détermination de l'objectif de capacité de refroidissement 103 comprend une première étape E1 de détermination d'un état de charge rapide Ech du dispositif de stockage électrique 2. Au cours de la première étape E1 de détermination, il est vérifié si le dispositif de stockage électrique 2 est effectivement en état de charge rapide, c'est-à-dire notamment si le véhicule automobile est en station arrêtée moteur à l'arrêt, le dispositif de stockage électrique 2 étant branché à une source électrique délivrant un courant électrique par exemple de 400 A à 800 V. Au cours de la première étape E1, un niveau de charge du dispositif de stockage électrique 2 est également vérifié pour connaître la charge à effectuer pour atteindre un seuil déterminé de charge, notamment choisi par un utilisateur, ou bien pour atteindre un niveau de charge de 100%, soit un niveau de charge maximal du dispositif de stockage électrique 2.

L'étape de détermination de l'objectif de capacité de refroidissement 103 comprend aussi une deuxième étape E2 de détermination d'une puissance thermique Pth à extraire du dispositif de stockage électrique 2 jusqu'à ce que le niveau de charge du dispositif de stockage électrique 2 atteigne le seuil déterminé. De manière courante, le seuil déterminé est de 100% qui indique que le dispositif de stockage électrique 2 est au maximum de ses capacités de stockage. Au cours de la deuxième étape E2, à partir du niveau de charge du dispositif de stockage électrique 2 et pour atteindre un niveau de charge de 100%, il est calculé quelle est la puissance thermique générée, et donc à extraire, au cours de ce passage du niveau de charge observé au niveau de charge de 100%.

Le procédé de refroidissement comprend aussi une troisième étape E3 de mesure de la température du dispositif de stockage électrique Tbatt. Cette acquisition est par exemple effectuée par un capteur de température que loge le dispositif de stockage électrique 2. La température du dispositif de stockage électrique Tbatt est utilisée ultérieurement pour mesurer une puissance de refroidissement Pfr du système de conditionnement thermique 1

Le procédé de refroidissement comprend ensuite une quatrième étape d'adaptation E4 d'une circulation du fluide réfrigérant FR ou bien du fluide caloporteur FC à l'intérieur du premier échangeur de chaleur 4 afin que la température du fluide réfrigérant TFR soit comprise entre 15°C et 28°C, préférentiellement entre 20°C et 26°C. Autrement dit, il est avantageusement proposé par la présente invention de maintenir la température du fluide réfrigérant TFR dans une plage de température comprise entre 15°C et 28°C, préférentiellement entre 20°C et 26°C à partir d'une adaptation de la circulation du fluide réfrigérant FR et/ou du fluide caloporteur FC à l'intérieur du premier échangeur de chaleur 4, et plus particulièrement en contrôlant le débit massique M soit du fluide réfrigérant FR, soit du fluide caloporteur FC, à l'intérieur du premier échangeur de chaleur 4.

Pour ce faire, la quatrième étape E4 comprend une étape d'ajustement d'une conductivité thermique globale du dispositif de stockage électrique Gbatt. On rappelle que la conductivité thermique globale du dispositif de stockage électrique Gbatt est une fonction croissante du débit massique M du fluide réfrigérant FR à l'intérieur du premier échangeur de chaleur 4. La conductivité thermique globale du dispositif de stockage électrique Gbatt est donnée par la formule [2] suivante :

$$\text{Gbatt} = (1/Gb + 1/Gi + 1/Gp + 1/Gc + 1/Gch)^{-1} \qquad\qquad [2]$$

Dans laquelle :

- Gb est la conductivité thermique du dispositif de stockage électrique 2,

- Gi est la conductivité thermique d'une interface disposée entre le dispositif de stockage électrique 2 et le premier échangeur de chaleur 4 comprenant par exemple un coussin thermique,

- Gp est la conductivité thermique de la paroi du premier échangeur de chaleur 4,

- Gc est la conductivité thermique du fluide caloporteur FC, et

- Gch est la conductivité thermique du fluide réfrigérant FR.

La puissance de refroidissement Pfr du système de conditionnement thermique 1 est donnée par la formule [3] suivante :

$$Pfr = Gbatt \ (Tbatt - TFR) \hspace{3cm} [3]$$

Pour atteindre l'objectif fixé, il est nécessaire que la puissance thermique Pth à extraire du dispositif de stockage électrique 2 soit égale à, donc compensée par, la puissance de refroidissement Pfr du système de conditionnement thermique 1.

Le procédé de refroidissement comprend ensuite une étape de comparaison 104 de la température du fluide réfrigérant TFR avec une température minimale Tmin et une température maximale Tmax du fluide réfrigérant FR fixée pour optimiser le système de conditionnement thermique 1. La température minimale Tmin est notamment égale à 15°C, préférentiellement 20°C. La température Tmax est notamment égale à 28°C, préférentiellement égale à 26°C.

Si la condition selon laquelle la température du fluide réfrigérant TFR est comprise entre la température minimale Tmin et la température maximale Tmax, le procédé revient de manière itérative à l'étape d'initialisation 101 ou bien à une étape intermédiaire X.

Si la température du fluide réfrigérant TFR est inférieure à la température minimale Tmin, on en déduit que la température du fluide réfrigérant TFR est trop basse et qu'il convient d'adapter la circulation du fluide réfrigérant FR, par exemple en augmentant le débit massique M du fluide réfrigérant FR circulant à l'intérieur du premier échangeur de chaleur 4 comparé à ce qu'était ce débit massique du fluide réfrigérant avant la comparaison des températures, ou bien d'augmenter le débit massique M du fluide caloporteur FC circulant à l'intérieur du premier échangeur de chaleur 4 par rapport au débit massique du fluide caloporteur avant la comparaison des températures.

Si la température du fluide réfrigérant TFR est supérieure à la température maximale Tmax, on en déduit que la température du fluide réfrigérant TFR est trop haute et qu'il convient d'adapter la circulation du fluide réfrigérant FR, notamment en réduisant le débit massique M du fluide réfrigérant FR circulant à l'intérieur du premier échangeur de chaleur 4 comparé à ce qu'était ce débit massique de fluide réfrigérant avant la comparaison des températures, ou bien de baisser le débit massique M du fluide caloporteur FC circulant à l'intérieur du premier échangeur de chaleur 4, par rapport au débit massique du fluide caloporteur avant la comparaison des températures.

Selon la variante de réalisation du système de conditionnement thermique 1 représenté sur la figure 1, la modification du débit massique M est obtenue à partir d'une manœuvre à l'ouverture et/ou à la fermeture de la vanne de contrôle du débit 15.

Selon la variante de réalisation du système de conditionnement thermique 1 représenté sur la figure 2, la modification du débit massique M est obtenue à partir d'une manœuvre à l'ouverture et/ou à la fermeture du moyen de contrôle du débit 21, ou bien à partir d'une augmentation ou d'une diminution d'une vitesse de rotation de la pompe 19.

L'ensemble de ces dispositions est tel que le système de conditionnement thermique 1 est efficace et apte à refroidir en état de charge rapide le dispositif de stockage électrique 2 à partir d'une basse pression BP qui est notablement supérieure à une basse pression de l'art antérieur, y compris dans le cas où le fluide réfrigérant FR est un fluide du type naturel, tout en assurant un refroidissement de l'habitacle du véhicule, le bilan énergétique de ce double refroidissement étant particulièrement bon.

L'invention ne saurait toutefois se limiter aux moyens et configurations décrits et illustrés ici, et elle s'étend également à tous moyens ou configurations équivalentes et à toute combinaison techniquement opérant de tels moyens. En particulier, l'architecture du circuit de fluide réfrigérant 3 et/ou du circuit de fluide caloporteur 16 peut être modifiée sans nuire à l'invention dans la mesure où il remplit les fonctionnalités décrites dans le présent document.

**Revendications**

1. Procédé de refroidissement d'un dispositif de stockage électrique (2) par l'intermédiaire d'un circuit (3) de fluide réfrigérant à l'intérieur duquel circule un fluide réfrigérant naturel (FR), le circuit de fluide réfrigérant (3) comprenant au moins un premier échangeur de chaleur (4) couplé thermiquement au dispositif de stockage électrique (2), dans lequel le procédé de refroidissement comprend au moins :

   - une première étape (E1) de détermination d'un état de charge rapide (Ech) du dispositif de stockage électrique (2),

- une deuxième étape (E2) de détermination d'une puissance thermique (Pth) à extraire du dispositif de stockage électrique (2) jusqu'à ce qu'un niveau de charge du dispositif de stockage électrique (2) soit supérieur ou égale à un seuil déterminé,
- une troisième étape (E3) de mesure d'une température du dispositif de stockage électrique (Tbatt),
- une quatrième étape (E4) d'adaptation d'une circulation du fluide réfrigérant (FR) à l'intérieur du premier échangeur de chaleur (4) afin qu'une température du fluide réfrigérant (TFR) soit comprise entre 15°C et 28°C.

2. Procédé de refroidissement selon la revendication 1, dans lequel la quatrième étape (E4) adapte la circulation du fluide réfrigérant (FR) à l'intérieur du premier échangeur de chaleur (4) afin que la température du fluide réfrigérant (FR) soit comprise entre 20°C et 26°C.

3. Procédé de refroidissement selon l'une quelconque des revendications précédentes, dans lequel la deuxième étape (E2) prend en compte le niveau de charge du dispositif de stockage électrique (2).

4. Procédé de refroidissement selon l'une quelconque des revendications précédentes, dans lequel le premier échangeur de chaleur (4) est un échangeur de chaleur fluide réfrigérant / fluide caloporteur constitutif d'un circuit (13) de fluide caloporteur (FC).

5. Procédé de refroidissement selon la revendication 4, dans lequel le circuit de fluide caloporteur (13) comprend une pompe (19) à vitesse variable.

6. Procédé de refroidissement selon la revendication 5, dans lequel la quatrième étape (E4) comprend une phase de modification d'une vitesse de rotation de la pompe (19).

7. Procédé de refroidissement selon la revendication 6 dans lequel le circuit de fluide caloporteur (13) comprend une ligne de contournement (20) qui s'étend entre un point de dérivation (P'1) interposé entre le premier échangeur de chaleur (4) et le dispositif de stockage électrique (2), et un point de raccordement (P'2) interposé entre le dispositif de stockage électrique (2) et le premier échangeur de chaleur (4), et en ce que la ligne de contournement (20) est équipée d'un moyen de contrôle du débit (21) de fluide caloporteur (FC) circulant à l'intérieur de la ligne de contournement (20).

8. Procédé de refroidissement selon la revendication 7 dans lequel la quatrième étape (E4) comprend une phase de modification du débit de fluide caloporteur (FC) par ouverture ou fermeture dudit moyen de contrôle du débit (21).

9. Procédé de refroidissement selon l'une quelconque des revendications précédentes, dans lequel le premier échangeur de chaleur (4) est un échangeur de chaleur direct.

10. Procédé de refroidissement selon l'une quelconque des revendications précédentes, dans lequel le circuit de fluide réfrigérant (3) comprend un dispositif d'expansion (14) en amont du premier échangeur de chaleur (4), une vanne de contrôle du débit (15) étant interposée entre le premier échangeur de chaleur (4) et le dispositif d'expansion (14).

11. Procédé de refroidissement selon l'une quelconque des revendications précédentes, dans lequel la quatrième étape (E4) comprend une étape de comparaison (104) de la température du fluide réfrigérant (TFR) avec une température minimale (Tmin) et une température maximale (Tmax) du fluide réfrigérant (FR) fixées pour optimiser le système de conditionnement thermique (1).

12. Procédé de refroidissement selon la revendication 11, dans lequel, si la température du fluide réfrigérant (TFR) est inférieure à la température minimale (Tmin), la quatrième étape (E4) comprend une étape d'adaptation de la circulation du fluide réfrigérant (FR) circulant à l'intérieur du premier échangeur de chaleur (4), et/ou bien une étape d'augmentation d'un débit massique (M) du fluide caloporteur (FC) circulant à l'intérieur du premier échangeur de chaleur (4).

13. Procédé de refroidissement selon la revendication 11, dans lequel, si la température du fluide réfrigérant (TFR) est supérieure à la température maximale (Tmax), la quatrième étape (E4) comprend une étape d'adaptation de la circulation du fluide réfrigérant (FR) circulant à l'intérieur du premier échangeur de chaleur (4), et/ou bien une étape de diminution d'un débit massique (M) du fluide caloporteur (FC) circulant à l'intérieur du premier échangeur de chaleur (4).

**14.** Procédé de refroidissement selon l'une quelconque des revendications précédentes, dans lequel une pression de fluide réfrigérant à l'intérieur du premier échangeur de chaleur (4) est maintenue entre 51 bars et 69 bars pour optimiser le système de conditionnement thermique (1).

**15.** Procédé de refroidissement selon l'une quelconque des revendications précédentes, dans lequel le fluide réfrigérant (FR) est du dioxyde de carbone.

**Patentansprüche**

**1.** Verfahren zum Kühlen einer elektrischen Speichervorrichtung (2) mittels eines Kühlfluidkreislaufs (3), in dem ein natürliches Kühlfluid (FR) zirkuliert, wobei der Kühlfluidkreislauf (3) mindestens einen ersten Wärmetauscher (4) enthält, der thermisch mit der elektrischen Speichervorrichtung (2) gekoppelt ist, wobei das Kühlverfahren mindestens enthält:

- einen ersten Schritt (E1) der Bestimmung eines Schnellladezustands (Ech) der elektrischen Speichervorrichtung (2),
- einen zweiten Schritt (E2) der Bestimmung einer thermischen Leistung (Pth), die aus der elektrischen Speichervorrichtung (2) zu entnehmen ist, bis ein Ladepegel der elektrischen Speichervorrichtung (2) höher als eine oder gleich einer bestimmten Schwelle ist,
- einen dritten Schritt (E3) der Messung einer Temperatur der elektrischen Speichervorrichtung (Tbatt),
- einen vierten Schritt (E4) der Anpassung einer Zirkulation des Kühlfluids (FR) innerhalb des ersten Wärmetauschers (4), damit einer Temperatur des Kühlfluids (TFR) zwischen 15°C und 28°C liegt.

**2.** Kühlverfahren nach Anspruch 1, wobei der vierte Schritt (E4) die Zirkulation des Kühlfluids (FR) innerhalb des ersten Wärmetauschers (4) anpasst, damit die Temperatur des Kühlfluids (FR) zwischen 20°C und 26°C liegt.

**3.** Kühlverfahren nach einem der vorhergehenden Ansprüche, wobei der zweite Schritt (E2) den Ladepegel der elektrischen Speichervorrichtung (2) berücksichtigt.

**4.** Kühlverfahren nach einem der vorhergehenden Ansprüche, wobei der erste Wärmetauscher (4) ein Kühlfluid/Wärmeträgerfluid-Wärmetauscher ist, der wesentlicher Bestandteil eines Kreislaufs (13) von Wärmeträgerfluid (FC) ist.

**5.** Kühlverfahren nach Anspruch 4, wobei der Wärmeträgerfluidkreislauf (13) eine Pumpe (19) mit variabler Geschwindigkeit enthält.

**6.** Kühlverfahren nach Anspruch 5, wobei der vierte Schritt (E4) eine Änderungsphase einer Drehgeschwindigkeit der Pumpe (19) enthält.

**7.** Kühlverfahren nach einem der Ansprüche 4 bis 6, wobei der Wärmeträgerfluidkreislauf (13) eine Umgehungsleitung (20) enthält, die sich zwischen einem Abzweigpunkt (P'l), der zwischen den ersten Wärmetauscher (4) und die elektrische Speichervorrichtung (2) eingefügt ist, und einem Anschlusspunkt (P'2) erstreckt, der zwischen die elektrische Speichervorrichtung (2) und den ersten Wärmetauscher (4) eingefügt ist, und dass die Umgehungsleitung (20) mit einer Steuereinrichtung (21) des Durchsatzes von innerhalb der Umgehungsleitung (20) zirkulierendem Wärmeträgerfluid (FC) ausgestattet ist.

**8.** Kühlverfahren nach Anspruch 7, wobei der vierte Schritt (E4) eine Änderungsphase des Durchsatzes von Wärmeträgerfluid (FC) durch Öffnen oder Schließen der Steuereinrichtung des Durchsatzes (21) enthält.

**9.** Kühlverfahren nach einem der vorhergehenden Ansprüche, wobei der erste Wärmetauscher (4) ein direkter Wärmetauscher ist.

**10.** Kühlverfahren nach einem der vorhergehenden Ansprüche, wobei der Kühlfluidkreislauf (3) eine Expansionsvorrichtung (14) stromaufwärts vor dem ersten Wärmetauscher (4) enthält, wobei ein Steuerventil des Durchsatzes (15) zwischen den ersten Wärmetauscher (4) und die Expansionsvorrichtung (14) eingefügt ist.

**11.** Kühlverfahren nach einem der vorhergehenden Ansprüche, wobei der vierte Schritt (E4) einen Schritt des Vergleichs (104) der Temperatur des Kühlfluids (TFR) mit einer minimalen Temperatur (Tmin) und einer maximalen Temperatur (Tmax) des Kühlfluids (FR) enthält, die festgelegt sind, um das thermische Konditionierungssystem (1) zu optimieren.

12. Kühlverfahren nach Anspruch 11, wobei, wenn die Temperatur des Kühlfluids (TFR) niedriger ist als die minimale Temperatur (Tmin), der vierte Schritt (E4) einen Schritt der Anpassung der Zirkulation des im Inneren des ersten Wärmetauschers (4) zirkulierenden Kühlfluids (FR) und/oder auch einen Schritt der Erhöhung eines Massendurchsatzes (M) des im Inneren des ersten Wärmetauschers (4) zirkulierenden Wärmeträgerfluids (FC) enthält.

13. Kühlverfahren nach Anspruch 11, wobei, wenn die Temperatur des Kühlfluids (TFR) höher ist als die maximale Temperatur (Tmax), der vierte Schritt (E4) einen Schritt der Anpassung der Zirkulation des im Inneren des ersten Wärmetauschers (4) zirkulierenden Kühlfluids (FR) und/oder auch einen Schritt der Verringerung eines Massendurchsatzes (M) des im Inneren des ersten Wärmetauschers (4) zirkulierenden Wärmeträgerfluids (FC) enthält.

14. Kühlverfahren nach einem der vorhergehenden Ansprüche, wobei ein Kühlfluiddruck innerhalb des ersten Wärmetauschers (4) zwischen 51 Bar und 69 Bar gehalten wird, um das thermische Konditionierungssystem (1) zu optimieren.

15. Kühlverfahren nach einem der vorhergehenden Ansprüche, wobei das Kühlfluid (FR) Kohlendioxid ist.

**Claims**

1. Method for cooling an electrical storage device (2) by way of a coolant circuit (3) within which a natural coolant (FR) flows, the coolant circuit (3) comprising at least one first heat exchanger (4) thermally coupled to the electrical storage device (2), wherein the cooling method comprises at least:

   - a first step (E1) of determining a quick charging state (Ech) of the electrical storage device (2),
   - a second step (E2) of determining a thermal power (Pth) to be extracted from the electrical storage device (2) until a charge level of the electrical storage device (2) is greater than or equal to a determined threshold,
   - a third step (E3) of measuring a temperature of the electrical storage device (Tbatt),
   - a fourth step (E4) of adapting a flow of the coolant (FR) within the first heat exchanger (4) in order that a temperature of the coolant (TFR) is between 15°C and 28°C.

2. Cooling method according to Claim 1, wherein the fourth step (E4) adapts the flow of the coolant (FR) within the first heat exchanger (4) in order that the temperature of the coolant (FR) is between 20°C and 26°C.

3. Cooling method according to either one of the preceding claims, wherein the second step (E2) takes the charge level of the electrical storage device (2) into account.

4. Cooling method according to any one of the preceding claims, wherein the first heat exchanger (4) is a constituent coolant/heat transfer fluid heat exchanger of a heat transfer fluid (FC) circuit (13).

5. Cooling method according to Claim 4, wherein the heat transfer fluid circuit (13) comprises a variable speed pump (19).

6. Cooling method according to Claim 5, wherein the fourth step (E4) comprises a phase of modifying a rotational speed of the pump (19).

7. Cooling method according to any one of Claims 4 to 6, wherein the heat transfer fluid circuit (13) comprises a bypass line (20), which extends between a diversion point (P'1) interposed between the first heat exchanger (4) and the electrical storage device (2), and a connection point (P'2) interposed between the electrical storage device (2) and the first heat exchanger (4), and in that the bypass line (20) is equipped with a means (21) for controlling the flow rate of heat transfer fluid (FC) flowing within the bypass line (20).

8. Cooling method according to Claim 7, wherein the fourth step (E4) comprises a phase of modifying the flow rate of heat transfer fluid (FC) by opening or closing said means (21) for controlling the flow rate.

9. Cooling method according to any one of the preceding claims, wherein the first heat exchanger (4) is a direct heat exchanger.

10. Cooling method according to any one of the preceding claims, wherein the coolant circuit (3) comprises an expansion device (14) upstream of the first heat exchanger (4), a flow rate control valve (15) being interposed between the first heat exchanger (4) and the expansion device (14).

11. Cooling method according to any one of the preceding claims, wherein the fourth step (E4) comprises a step (104) of comparing the temperature of the coolant (TFR) with a minimum temperature (Tmin) and a maximum temperature (Tmax) of the coolant (FR) that are set in order to optimize the thermal conditioning system (1).

12. Cooling method according to Claim 11, wherein, if the temperature of the coolant (TFR) is below the minimum temperature (Tmin), the fourth step (E4) comprises a step of adapting the flow of the coolant (FR) flowing within the first heat exchanger (4), and/or a step of increasing a mass flow rate (M) of the heat transfer fluid (FC) flowing within the first heat exchanger (4).

13. Cooling method according to Claim 11, wherein, if the temperature of the coolant (TFR) is above the maximum temperature (Tmax), the fourth step (E4) comprises a step of adapting the flow of the coolant (FR) flowing within the first heat exchanger (4), and/or a step of reducing a mass flow rate (M) of the heat transfer fluid (FC) flowing within the first heat exchanger (4).

14. Cooling method according to any one of the preceding claims, wherein a coolant pressure within the first heat exchanger (4) is maintained between 51 bar and 69 bar in order to optimize the thermal conditioning system (1).

15. Cooling method according to any one of the preceding claims, wherein the coolant (FR) is carbon dioxide.

Fig.1

Fig.2

Fig.3

Fig.4